# EUROPEAN PATENT APPLICATION

(11) **EP 4 649 836 A1**
(43) Date of publication of application: **19.11.2025**
(21) Application number: 23930393.6
(22) Date of filing: 28.03.2023
(51) Int. Cl.: A23L 11/10, A23L 11/00, A23C 11/00

(54) **METHOD FOR PRODUCING GRANULAR SOYBEAN MILK POWDER AND GRANULAR SOYBEAN MILK POWDER**

(71) Applicant: MARUSAN-AI CO., LTD., Okazaki-shi, Aichi 444-2193 (JP)
(72) Inventor: EGUSA, Shintaro, Okazaki-shi, Aichi 444-2193 (JP)
(74) Representative: RGTH
(86) International application number: PCT/JP2023/012666
(87) International publication number: WO 2024/201753

(57) **Abstract**

It is an object of the present invention to provide a technique for producing a soy milk powder with high dispersibility and high solubility. The present invention provides a method for producing a granulated soy milk powder, comprising: a concentration step that comprises producing concentrated soy milk satisfying specific conditions from raw material soy milk; and a drying step that comprises subjecting the concentrated soy milk to spray granulation drying to obtain a soy milk powder.

## Description

### TECHNICAL FIELD

The present invention relates to a method for producing a granulated soy milk powder and to a granulated soy milk powder.

### BACKGROUND ART

Soy milk is widely accepted by consumers as a highly nutritious beverage that contains a large amount of protein and other nutrients.

Meanwhile, soy milk powder, which is dried soy milk, has been developed to provide soy milk products with high storage stability, ease of distribution, and other improved properties (see, for example, Patent Documents 1 to 3).

Patent Document 1: Japanese Unexamined Patent Application, Publication No. H6-153841
Patent Document 2: Japanese Unexamined Patent Application, Publication No. 2007-6835
Patent Document 3: Japanese Unexamined Patent Application, Publication No. 2010-268781

### DISCLOSURE OF THE INVENTION

### Problems to be Solved by the Invention

A known problem with such soy milk powder is that when added to a liquid (e.g., water), it will easily form clumps or aggregates due to its low dispersibility or solubility. As disclosed in Patent Documents 1 to 3, a conventional attempt to solve such a problem includes using an excipient to improve the dispersibility or solubility of soy milk powder.

Unfortunately, an excipient-containing soy milk powder may have a lower nutritional content (specifically, a lower protein content). For example, a soy milk powder produced through adding 10 mass% (solid basis) of an excipient to raw material soy milk may have a protein content approximately half of the original content. Such an excipient-containing soy milk powder is less effective as a protein source.

Thus, there is a need for a technique to produce highly dispersible or soluble soy milk powder regardless of whether or not excipients are used.

An object of the present invention, has been made in view of the above circumstances, to provide a technique for producing a soy milk powder with high dispersibility and high solubility.

### Means for Solving the Problems

The inventor has completed the present invention based on findings that a soy milk powder production process including: preparing concentrated soy milk satisfying specific conditions from raw material soy milk; and drying the concentrated soy milk will provide a solution to the problem. Specifically, the present invention provides the aspects shown below.

(1) A method for producing a granulated soy milk powder, the method comprising: a concentration step that comprises producing concentrated soy milk from raw material soy milk; and a drying step that comprises subjecting the concentrated soy milk to spray granulation drying to obtain a soy milk powder, wherein the concentrated soy milk has a solid content of 18 mass% or more, and wherein the concentrated soy milk has a viscosity of 500 mPa·s or less at 20°C.
(2) A granulated soy milk powder having an average particle size of 220 µm or more and 500 µm or less.
(3) The granulated soy milk powder according to aspect (2), in which the granulated soy milk powder has a particle size distribution having:
   a D10 of 50 µm;
   a D50 of 250 µm; and
   a D90 of 500 µm.
(4) The granulated soy milk powder according to aspect (2), in which the granulated soy milk powder contains no excipient.

### Effects of the Invention

The present invention provides a technique for producing a soy milk powder with high dispersibility and high solubility.

### PREFERRED MODE FOR CARRYING OUT THE INVENTION

Hereinafter, embodiments of the present invention will be described in detail, which are not intended to limit the present invention.

### <Method for Producing Granulated Soy Milk Powder>

The present invention is directed to a method for producing a granulated soy milk powder (hereinafter, also referred to as "the production method of the present invention"), including: a concentration step that comprises producing concentrated soy milk from raw material soy milk; and a drying step that comprises subjecting the concentrated soy milk to spray granulation drying to obtain a soy milk powder. The concentrated soy milk has a solid content of 18 mass% or more, and the concentrated soy milk has a viscosity of 500 mPa·s or less at 20°C.

In general, soy milk powder is obtained by spray-drying raw material soy milk. In some cases, the spray drying is preceded by a concentration step that includes heating the raw material soy milk to evaporate some of the water. Such a concentration step can reduce the volume of the raw material soy milk and increase the drying efficiency and so on.

However, the inventor has found that the concentration step conditions significantly affect the dispersibility and solubility of the resulting soy milk powder. Specifically, the inventors have found that if the soy milk protein undergoes denaturation during the concentration step, the resulting soy milk powder tends to have low dispersibility and low solubility. The inventors have also found that the solid content and viscosity of the concentrated soy milk resulting from the concentration step can be indicators of whether or not the soy milk protein has undergone denaturation.

As a result of further study, the inventor has found that concentrated soy milk with a solid content of 18 mass% or more and a 20°C viscosity of 500 mPa·s or less can not only successfully undergo spray granulation drying but also be dried into a powder with high dispersibility and high solubility.

The inventor has also found that such soy milk powder with high dispersibility and high solubility is in the form of a granulated soy milk powder with a specific average particle size.

### (1) Definition

Regarding the present invention, the following common terminology will be used in accordance with the definitions set forth below.

As used herein, the term "soy milk" is intended to encompass liquid products produced through a process that includes soaking soybeans in water, mashing them, adding water to the mashed soybeans, boiling down the resulting juice, and straining the boiled juice. The term "soy milk powder" is intended to encompass powders produced through reducing the water content of soy milk.

As used herein, the term "the dispersibility of soy milk powder" is intended to encompass the ability of soy milk powder to easily sink in a liquid (e.g., water) or to resist floating to the surface of the liquid when it is added to the liquid. The dispersibility of soy milk powder can be evaluated by the method shown in the EXAMPLES section.

As used herein, the term "the solubility of soy milk powder" is intended to encompass the ability of soy milk powder to have a particle size distribution close to that of raw material soy milk when it is added to a liquid (e.g., water). The solubility of soy milk powder can be evaluated by the method shown in the EXAMPLES section.

As used herein, the term "solid content" means the content (in units of mass%) of solids in a liquid (e.g., soy milk), which can be measured using a microwave moisture analyzer.

As used herein, the term "viscosity" means the coefficient of viscosity of a substance (in units of Pa·s), which can be measured using a B-type viscometer. Unless otherwise specified, the viscosity in the present invention is the value at 20°C.

As used herein, the term "granulated powder" means aggregates of primary particles. In an embodiment of the present invention, the granulated soy milk powder is in the form of grape tufted aggregates.

In the present invention, the "average particle size" may be determined by laser diffraction scattering methods (laser diffraction methods) based on Fraunhofer diffraction theory and Mie scattering theory. As used herein, the term "average particle size" is interchangeable with the D50 (median diameter) of particle size distribution.

As used herein, the expression "a particle size distribution having a Dn of X µm" means that n% of the particle population has particle sizes of X µm or less. For example, the expression "granulated soy milk powder has a D10 of 1 µm" means that 10% of all particles in the whole granulated soy milk powder have particle sizes of 1 µm or less. In the present invention, the Dn of particle size distribution may be determined by laser diffraction scattering methods (laser diffraction methods) based on Fraunhofer diffraction theory and Mie scattering theory.

As used herein, the term "water content" means the content (in units of mass%) of water in a substance (e.g., soy milk powder), which can be measured using an infrared moisture meter.

### (2) Details of the Production Method of the Present Invention

Hereinafter, each of the steps of the production method of the present invention will be described in detail.

### (2-1) Concentration Step

The concentration step includes producing concentrated soy milk from raw material soy milk.

### (2-1-1) Raw Soy Milk

The raw material soy milk may be similar to, but not limited to, that used in the production of conventional soy milk powder. To satisfy the requirements described later for the viscosity of concentrated soy milk, however, the raw material soy milk to be used should not have undergone any protein denaturation inducing step (e.g., excessive heating).

For ease of achieving the advantageous effects of the present invention, the raw material soy milk preferably contains solid components derived only from soybeans and is more preferably plain soy milk.

The raw material soy milk usually has a solid content of 9 to 10 mass%.

The raw material soy milk usually has a viscosity of 2 to 3 mPa·s at 20°C.

### (2-1-2) Concentration Step Conditions

The concentration step should be performed under conditions that successfully reduce the water content of the raw material soy milk and are less likely to cause soy milk protein denaturation. Whether or not soy milk protein denaturation has occurred can be determined based on the appearance of the soy milk (e.g., gelation), the viscosity of the soy milk (e.g., whether its viscosity is over 500 mPa·s at 20°C), or other properties.

To facilitate the prevention of soy milk protein denaturation, the concentration step is preferably performed under vacuum conditions.

In the concentration step, the degree of vacuum is usually 4 to 20 kPa, while it may be any level at which soy milk protein denaturation can be prevented and concentrated soy milk can be produced with the desired solid content.

The temperature of the concentration step is usually 30 to 70°C, while it may be adjusted depending on the desired solid content of concentrated soy milk and the degree of vacuum.

For ease of producing the desired concentrated soy milk, the concentration step is preferably performed using a falling film evaporator. The term "falling film evaporator" refers to a device that performs evaporation and concentration while allowing a liquid substance (soy milk) to flow and fall in the form of a liquid film on the heat-transfer inner wall surface of a heat exchanger.

In a case where the concentration step is performed using a falling film evaporator, the raw material soy milk is preferably concentrated under reduced pressure at an evaporation temperature in the range of 40 to 60°C with a difference between the evaporation temperature and the heating steam temperature in the range of 5 to 15°C.

The concentration step may include monitoring the solid content of the raw material soy milk and the solid content, viscosity, and any other properties of concentrated soy milk; and maintaining the desired solid content before the resulting concentrated soy milk is subjected to the drying step described below.

### (2-1-3) Concentrated Soy Milk

The concentrated soy milk resulting from the concentration step has a solid content of 18 mass% or more and a viscosity of 500 mPa·s or less at 20°C.

The lower limit of the solid content of the concentrated soy milk is 18 mass% or more, preferably 20 mass% or more.

To control the increase in viscosity, the upper limit of the solid content of the concentrated soy milk is preferably 25 mass% or less, more preferably 22 mass% or less.

At 20°C, the upper limit of the viscosity of the concentrated soy milk is 500 mPa·s or less, preferably 250 mPa·s or less, more preferably 100 mPa·s or less.

The lower limit of the viscosity of the concentrated soy milk is typically, but not limited to, 20 mPa·s or more at 20°C.

### (2-2) Drying Step

The drying step includes subjecting the concentrated soy milk to spray granulation drying to obtain a soy milk powder. The soy milk powder resulting from the drying step is a granulated soy milk powder, which is the target product in the present invention.

The spray granulation drying may be performed under any conditions that are less likely to cause protein denaturation, allow the spray drying to reduce the water content of the concentrated soy milk more effectively, and allow successful granulation of powder particles.

To make protein denaturation less likely to occur, the drying conditions for the spray granulation drying are preferably such that: the inlet temperature of hot air used for the drying is set at 120°C or more and 180°C or less, and the outlet temperature of hot air used for drying sets at 40°C or more and 90°C or less.

To facilitate the production of granulated soy milk powder, the spray granulation drying is preferably performed using a fluidized granulation spray dryer. The term "fluidized granulation spray dryer" refers to a device that sprays a liquid substance (soy milk) into a high-temperature air stream to dry it and granulates the dried substance by fluidized bed granulation process.

The granulated soy milk powder resulting from the drying step may be used as is or subjected to storing, processing, or other operations.

### (2-3) Other Steps

In addition to the steps described above, the production method of the present invention may or may not include any step that will not impair the advantageous effects of the present invention and is acceptable for the soy milk production process. Such a step may be performed at any point depending on its purpose and so on during the production method of the present invention.

Examples of such a step, which the production method of the present invention may include, are, for example, a heating step, a stirring step, a cooling step, a raw material soy milk enzyme inactivation step, a soy milk powder packing step, and a sterilization step.

### (3) Granulated Soy Milk Powder

The present invention also encompasses the granulated soy milk powder resulting from the production method of the present invention.

The granulated soy milk powder of the present invention has an average particle size of 220 µm or more and 500 µm or less. The conventional method for producing soy milk powder lacks, for example, adequate control of the viscosity of the concentrated soy milk to be dried. Therefore, the conventional art can hardly produce a granulated soy milk powder with the average particle size specified above.

The average particle size of the granulated soy milk powder of the present invention has a lower limit of 220 µm or more, preferably a lower limit of 250 µm or more.

The average particle size of the granulated soy milk powder of the present invention has an upper limit of 500 µm or less, preferably an upper limit of 300 µm or less.

The granulated soy milk powder of the present invention may have any suitable particle size distribution (Dn). The particle size distribution (Dn) of the granulated soy milk powder of the present invention may satisfy one or more or all of the following requirements so that the granulated soy milk powder will tend to be uniform.
- The particle size distribution should preferably have a D10 of 100 µm, more preferably a D10 of 80 µm, even more preferably a D10 of 50 µm.
- The particle size distribution should preferably have a D50 of 500 µm, more preferably a D50 of 300 µm, even more preferably a D50 of 250 µm.
- The particle size distribution should preferably have a D90 of 2,000 µm, more preferably a D90 of 1,000 µm, even more preferably a D90 of 500 µm.

The granulated soy milk powder of the present invention has good dispersibility and good solubility. In a preferred embodiment of the present invention, the granulated soy milk powder will have an average particle size of 0.5 µm or more and 1.5 µm or less when dissolved in water. The conventional soy milk powder tends to form clumps when added to water, which means that the conventional soy milk powder can hardly have such a small average particle size in water. The temperature of water in which the granulated soy milk powder is to be dissolved is preferably, but not limited to, 20°C or more and 80°C or less, more preferably 50°C or more and 60°C or less. The average particle size of the granulated soy milk powder in water may be measured immediately after it is dissolved in water or after the solution is cooled to 4°C or more and 20°C or less.

The granulated soy milk powder of the present invention may be in any sufficiently dry state. The granulated soy milk powder of the present invention preferably has a water content of 5.0 mass% or less, more preferably a water content of 4.5 mass% or less.

The granulated soy milk powder of the present invention includes aggregates of primary particles. As mentioned above, the aggregates of primary particles have an average particle size of 220 µm or more and 500 µm or less. The average particle size of the primary particles that form the aggregates is preferably, but not limited to, 30 to 60 µm.

The granulated soy milk powder of the present invention may or may not contain optional components, such as those for use in conventional soy milk powders. Such components include, for example, an excipient, a stabilizer, an emulsifier, and a thickener. The types and amounts of those components may be appropriately controlled depending on the desired effect and so on. Those components may be mixed as raw materials with the raw material soy milk during the production of the granulated soy milk powder.

In the conventional art disclosed in Patent Documents 1 to 3, an excipient is mixed as a raw material for a soy milk powder product to improve the dispersibility or solubility of the soy milk powder. Examples of such an excipient include sugars (e.g., monosaccharides, oligosaccharides, polysaccharides, chemical modifications of those saccharides) and proteins derived from sources other than soybeans (e.g., collagen). On the other hand, the granulated soy milk powder of the present invention has high dispersibility and high solubility regardless of the presence or absence of such an excipient. In a preferred embodiment of the present invention, therefore, the granulated soy milk powder contains no excipient. However, the present invention is not intended to exclude modes in which the granulated soy milk powder contains an excipient.

In a case where the granulated soy milk powder of the present invention contains an excipient, the content of the excipient in the powder is preferably such that the excipient does not function by itself or does not impair the function of the granulated soy milk powder as a protein source. In view of the above, the acceptable amount of the excipient is preferably 5 mass% or less, more preferably 1 mass% or less, based on the amount of the raw material soy milk. In such a case, the granulated soy milk powder produced from the raw material soy milk should preferably contain 33.3 mass% or less of the excipient, more preferably 9.1 mass% or less of the excipient.

The granulated soy milk powder of the present invention may be used for any suitable applications, such as various applications for conventional soy milk powders.

### EXAMPLES

Hereinafter, the present invention will be described in more detail with reference to examples, which are not intended to limit the present invention.

### <Preparation of Soy Milk Powder>

A granulated soy milk powder (consisting of raw material soy milk-derived components) was prepared by the method described below. In Reference Example, a commercially available soy milk powder was provided.

### (1) Concentration Step

Commercially available soy milk (with a solid content of approximately 9 mass%) was provided as raw material soy milk. The raw material soy milk was concentrated under vacuum conditions using a falling film evaporator. The vacuum conditions were set such that the raw material soy milk was under reduced pressure at an evaporation temperature in the range of 40 to 60°C with a difference between the evaporation temperature and the heating steam temperature in the range of 5 to 15°C.

During the concentration step, the solid content, viscosity, and other properties of the raw material soy milk were monitored. The concentration step was completed when the solid content of the raw material soy milk reached 18 to 22 mass%, and the resulting soy milk was collected as concentrated soy milk and subjected to the drying step. The concentrated soy milk had a viscosity (20°C) of 250 mPa·s at the time point immediately before it was subjected to the drying step.

In "Comparative Example-1", soy milk that had not undergone any concentration step (raw material soy milk itself) was subjected to the drying step.

### (2) Drying Step

The concentrated soy milk was subjected to spray granulation drying using a fluidized granulation spray dryer. In this way, the concentrated soy milk was subjected to drying and granulation to obtain a granulated soy milk powder.

In "Comparative Example-2", a soy milk powder, which was a commercially available product and not a granulated powder, was obtained by drying with a single-stage spray dryer and a drum dryer.

### <Evaluation of Granulated Soy Milk Powder>

The resulting soy milk powders were evaluated for various properties as shown below.

### (1) Average Particle Size and Particle Size Distribution (Dn)

The average particle size of each of the soy milk powders was measured by laser diffraction scattering method (laser diffraction method) based on Fraunhofer diffraction theory and Mie scattering theory. The measurement was performed using Mastersizer 3000 (manufactured by Malvern Panalytical Ltd.). The targets to be measured for average particle size at 20°C were as shown below. The dry and wet methods were respectively used to measure the powder sample and the aqueous solution sample.
- Each of the soy milk powders
- An aqueous solution of 7 mass% of each of the soy milk powders

### (2) Water Content

The water content of each of the soy milk powders was measured using an infrared moisture meter (FD-720 manufactured by Kett Electric Laboratory Co. Ltd.).

### (3) Dispersibility

MilliQ water (300 g) was placed in a 500 ml stainless steel pot and maintained at a water temperature of 60°C. Each soy milk powder (25 g) was then added to the pot while being stirred with a homogenizing mixer (at 5,000 rpm) and the time taken for the whole amount of the powder to sink (the dispersion time in units of second) was measured. The shorter the dispersion time, the higher the dispersibility.

### (4) Solubility

As in the evaluation of the dispersibility, each soy milk powder was added to MilliQ water, which was kept hot, and stirred to form an aqueous solution of each soy milk powder. It was determined what particle size distribution each resulting aqueous solution had. The determined particle size distribution was compared with that of the raw material soy milk and evaluated according to the criteria below. Whether or not the particle size distributions were close to each other was determined by comparing the positions and sizes of the peaks and other characteristics.
A: The determined particle size distribution is close to that of the raw material soy milk. B: The determined particle size distribution differs from that of the raw material soy milk.

### <Results>

The results of each evaluation are shown in the table.

The granulated soy milk powder obtained according to the production method of the present invention (Example) had a significantly high level of dispersibility and solubility. The granulated soy milk powder obtained according to the production method of the present invention had an average particle size stably falling within the range of 220 µm or more and 300 µm or less.

In this regard, as a result of particle size distribution analysis, it was determined that the primary particles in the granulated soy milk powder had an average particle size of approximately 50 µm.

On the other hand, in the case where no concentration step was performed (Comparative Example-1), it was not possible to stably obtain any granulated soy milk powder. In that case, the resulting powder also had very low dispersibility and formed large aggregates (clumps) in the aqueous solution, which indicated low solubility.

Although no data is shown, the spray granulation drying was successfully performed when the concentrated soy milk had a viscosity (20°C) of 500 mPa·s or less even with a high solid content. Moreover, the concentrated soy milk satisfying all the requirements according to the present invention was prevented from undergoing soy milk protein denaturation, which has an influence on gelation and so on, and the resulting granulated soy milk powder had both high dispersibility and high solubility. On the other hand, concentrated soy milk with a viscosity (20°C) of more than 500 mPa·s tended to have undergone soy milk protein denaturation regardless of its solid content and other properties, and not only had difficulty in undergoing spray granulation drying but also was only converted into a powder with low dispersibility and low solubility. This shows that, to obtain a granulated soy milk powder with high dispersibility and high solubility, it is very important to prevent protein denaturation during the concentration step. It is also apparent that the solid content and viscosity of concentrated soy milk are important indicators for the prevention of denaturation.

**[Table 1]**

| | | Example | Comparative Example-1 | Comparative Example-2 | Reference Example (commercially available product) |
|---|---|---|---|---|---|
| Concentration step | | Present | Absent | Absent | Present |
| Drying step | | Spray granulation drying | Spray granulation drying | Drum drying | Spray drying |
| Average particle size (µm) | Soy milk powder | 245 (granulated) | 50 to 300 (not granulated) | 122 (not granulated) | 47.9 |
| | Aqueous solution | 0.8 | Not measurable (clumping) | 22.8 | 18.7 |
| Particle size distribution (µm) | D10 | 50.6 | 50 | 38.8 | 20.6 |
| | D50 | 253 | 100 to 200 | 122 | 47.9 |
| | D90 | 470 | 300 | 344 | 103 |
| Water content (mass%) | | 5.5 | 6.3 | 2.5 | 6.0 |
| Dispersion time (seconds) | | 40 | Over 180 | 118 | Over 180 |
| Solubility | | A | B | B | B |

## Claims

1. A method for producing a granulated soy milk powder,
the method comprising:
a concentration step that comprises producing concentrated soy milk from raw material soy milk; and
a drying step that comprises subjecting the concentrated soy milk to spray granulation drying to obtain a soy milk powder,
wherein the concentrated soy milk has a solid content of 18 mass% or more, and
wherein the concentrated soy milk has a viscosity of 500 mPa·s or less at 20°C.

2. A granulated soy milk powder having an average particle size of 220 µm or more and 500 µm or less.

3. The granulated soy milk powder according to claim 2, wherein the granulated soy milk powder has a particle size distribution having:
a D10 of 50 µm;
a D50 of 250 µm; and
a D90 of 500 µm.

4. The granulated soy milk powder according to claim 2, wherein the granulated soy milk powder contains no excipient.
